# EUROPÄISCHE PATENTSCHRIFT

(11) **EP 3 358 454 B1**
(45) Veröffentlichungstag und Bekanntmachung des Hinweises auf die Patenterteilung: **11.03.2020**
(21) Anmeldenummer: 18152198.0
(22) Anmeldetag: 17.01.2018
(51) Int. Cl.: G06F 3/0487, G06F 3/00, G06F 3/01, G06F 3/048, B60K 37/06, B60K 35/00

(54) **ANWENDERSCHNITTSTELLE, FORTBEWEGUNGSMITTEL UND VERFAHREN ZUR ANWENDERUNTERSCHEIDUNG**
USER INTERFACE, VEHICLE AND METHOD FOR USER DISTINGUISHING
INTERFACE UTILISATEUR, VÉHICULE ET PROCÉDÉ DE DISTINCTION DE L'UTILISATEUR

(30) Priorität: 06.02.2017 DE 102017201799
(43) Veröffentlichungstag der Anmeldung: 08.08.2018
(73) Patentinhaber: VOLKSWAGEN AKTIENGESELLSCHAFT, 38440 Wolfsburg (DE)
(72) Erfinder: Theimer, Wolfgang, 44879 Bochum (DE); Gehrling, Sebastian, 45357 Essen (DE); Reinhold, Rafael, Bochum 44797 (DE)

(56) Entgegenhaltungen:
- EP-A1- 2 124 139
- DE-A1-102005 035 111
- DE-A1-102007 034 273
- DE-A1-102012 219 736
- DE-A1-102015 220 400

## Beschreibung

### Stand der Technik

Die vorliegende Erfindung betrifft ein Computerprogrammprodukt, eine Signalfolge, ein Fortbewegungsmittel, eine Anwenderschnittstelle sowie ein Verfahren zur Anwenderunterscheidung. Insbesondere betrifft die vorliegende Erfindung eine Erkennung einer Anwenderposition bzw. einer Sitzposition eines Anwenders.

An Fahrerarbeitsplätzen ist es wichtig, eine Bedienung durch den Fahrer von einer Bedienung durch den Beifahrer unterscheiden zu können. Während beispielsweise eine Bedienung durch den Fahrer während der Wahrnehmung der Fahraufgabe verboten oder lediglich in eingeschränktem Umfang erlaubt sein soll, kann der Beifahrer den ihm zugeordneten Funktionsumfang in unbeschränktem Rahmen zugreifen/bedienen. Die üblicherweise verwendeten Sensoren haben keinen großen Erfassungsbereich und können daher nicht unterscheiden, ob sich eine Hand aus Richtung des Fahrersitzes oder aus Richtung des Beifahrersitzes annähert. Aufgrund dieser Tatsache ist eine Unterscheidung zwischen einer Hand des Fahrers oder einer Hand des Beifahrers erst dann möglich, wenn sich die Hand bereits nahe der Mittelkonsole befindet.

Ferner kann auch im Ansprechen auf ein Erkennen der rechten Hand des Fahrers eine Einflussnahme auf eine Bedienfunktion in einem Fortbewegungsmittel für den Fahrer veranlasst werden, während im Ansprechen auf das Erkennen der linken Hand des Beifahrers die entsprechenden Einstellungen für die Beifahrerseite vorgenommen werden.

DE 10 2007 034 273 A1 offenbart eine Anzeige- und Bediensystem für ein Kraftfahrzeug, umfassend eine Multi-View-Anzeigevorrichtung, mittels der zeitgleich mindestens zwei unterschiedliche Darstellungen für eine Betrachtung aus unterschiedlichen Betrachtungswinkelbereichen anzeigbar sind, eine Bedienvorrichtung zum Erfassen von Nutzereingaben und eine Detektionseinheit, die eine Annäherung eines Betätigungselements an die Bedienvorrichtung detektiert und das Betätigungselement einem der Betrachtungswinkelbereiche zuordnet, so dass eine mittels der Bedienvorrichtung erfasste Betätigungshandlung des Betätigungselements ebenfalls einem der mindestens zwei unterschiedlichen Betrachtungswinkelbereiche zuordenbar ist.

DE 10 2007 004 923 A1 offenbart eine Anzeige- und Bedienvorrichtung eines Kraftfahrzeugs. Die Anzeige- und Bedienvorrichtung umfasst eine Anzeigevorrichtung mit einer Anzeigefläche. Die Anzeigevorrichtung ist vorzugsweise als Touchscreen ausgebildet. Die grafische Darstellung von Informationen auf der Anzeigefläche wird über eine Steuereinheit gesteuert, die mit einer Speichervorrichtung verknüpft ist. In der Speichervorrichtung sind Daten abgelegt, die eine Umsetzung einer Benutzerschnittstelle mittels der Steuereinheit ermöglichen.

DE 10 2012 206 247 A1 offenbart ein Verfahren zur Anzeige einer Hand eines Bedieners eines Bedienelements eines Fahrzeugs auf einer Anzeigeeinrichtung des Fahrzeugs, wobei eine Berührung einer Bedienfläche des Bedienelements mit der Hand des Bedieners detektiert und eine Position eines Berührpunkts ermittelt wird, der Bediener identifiziert wird, eine Orientierung der Hand ermittelt wird und ein Bild einer entsprechend orientierten virtuellen Hand auf der Anzeigeeinrichtung derart angezeigt wird, dass eine Spitze eines Fingers der Position des Berührpunkts entspricht.

DE 10 2012 219 736 A1 beschreibt ein Verfahren zum Betreiben einer Eingabevorrichtung. Die Eingabevorrichtung umfasst einen vorgegebenen berührungssensitiven Eingabebereich. Abhängig von zumindest einem erfassten Bild, das eine Position und/oder eine Stellung eines vorgegebenen Betätigungselements in einer vorgegebenen Umgebung des berührungssensitiven Eingabebereichs repräsentiert, wird eine Stellung des Betätigungselements in Bezug auf den vorgegebenen berührungssensitiven Eingabebereich ermittelt. Abhängig von der ermittelten Stellung und einem erfassten Messsignal, das eine Eingabeposition und/oder einen Eingabebewegungsverlauf auf dem vorgegebenen berührungssensitiven Eingabebereich repräsentiert, wird ein Eingabezeichen ermittelt.

Ausgehend vom vorgenannten Stand der Technik ist es eine Aufgabe der vorliegenden Erfindung, eine robuste Unterscheidung einer Gesteneingabe zwischen einem Fahrer oder Beifahrer zur Verfügung zu stellen, um so den die Gesteneingabe ausführenden Anwender zu erkennen.

### Offenbarung der Erfindung

Die vorstehend identifizierte Aufgabe wird gelöst durch ein Verfahren zur Anwenderunterscheidung für berührungsempfindliche HMI-Oberflächen, durch eine Anwenderschnittstelle und durch ein Computerprogrammprodukt gemäß den unabhängigen Ansprüchen.

Nach einem ersten Schritt des Verfahrens wird die Hand oder ein Arm nebst Hand des Anwenders mittels eines Sensors erfasst. Dies kann während einer Ausführung einer dreidimensionalen, frei im Raum ausgeführten Geste erfolgen. Im Sensorsignal wird ein Schwerpunkt der Hand oder des Armes nebst Hand des Anwenders ermittelt. Anschließend erfolgt ein Erfassen eines Berührungspunkts der Hand bei Kontakt mit der berührungsempfindlichen HMI-Oberfläche. Es erfolgt ein Ermitteln eines Versatzes des Schwerpunkts zum Berührungspunkt und im Ansprechen darauf ein Unterscheiden der die HMI-Oberfläche bedienenden Anwender. Mit anderen Worten erfolgt beim Unterscheiden der Anwender ein Erkennen der (Sitz-)Position von die HMI-Oberfläche bedienenden Anwendern.

Dies kann eine Anwenderschnittstelle in die Lage versetzen, zu unterscheiden, ob es sich dabei um einen ersten Anwender (z.B. einem Fahrer) oder um einen zweiten Anwender (z.B. einem Beifahrer) handelt, der die HMI-Oberfläche bedient. Somit lässt sich eine Position des Anwenders, also ob es sich um den Fahrer und Beifahrer handelt, relativ zur HMI-Oberfläche zuverlässig bestimmen. Bei der Position kann es sich um die Anwenderposition (auch Sitzposition) des Anwenders (auch Bedieners) handeln.

Die Unteransprüche zeigen bevorzugte Weiterbildungen der Erfindung.

Der Sensor zur Erfassung der Hand des Anwenders kann beispielsweise in einer Mittelkonsole, in einem Armaturenbrett oder in einem Dachhimmel vorgesehen sein. Selbstverständlich sind auch Kombinationen der vorgenannten Positionen bzw. mehrere Sensoren zur kombinierten Verwendung an mindestens einer der vorgenannten Positionen möglich. Als Position des Erfassungssensors (z.B. ToF-Kamera) ist aus ergonomischen Gründen insbesondere ein Ort am Dachhimmel bzw. am Innenspiegel mit nach unten blickender Kamera oder ein Einbau in der Mittelkonsole mit nach oben schauender Kamera zu bevorzugen, da es ergonomischer ist, eine Hand im Wesentlichen horizontal als im Wesentlichen vertikal zu halten.

Eine Erkennung von Handgesten in einem freien Raum vor einem Eingabeelement erfolgt in zwei Schritten: Zunächst wird die Position der Hand bzw. der Arm nebst der Hand erkannt und der Bewegungspfad verfolgt. Danach erfolgt eine intelligente Auswertung dieses Bewegungspfades und deren Überführung in robuste Muster, welche später als erkannte Gesten zur Eingabe genutzt werden.

Der Schwerpunkt der Hand ist immer in Richtung des Armes verschoben. Bedingt durch diese Tatsache entsteht bei der Bedienung der berührungsempfindlichen HMI-Oberfläche von links oder rechts immer ein Versatz zum eigentlichen Berührungspunkt, der sich für Fahrer und Beifahrer unterscheidet. In Verbindung mit einer Beobachtung des Bewegungspfades vor der berührungssensitiven Oberfläche kann eine zuverlässige Unterscheidung zwischen der Bedienung von Fahrer bzw. Beifahrer gemacht werden.

Eine Gestensensorik wird vorliegend nicht dazu verwendet, explizite Eingaben durch Handgesten auszulösen, sondern durch Vergleich der Projektion des 3-D-Schwerpunkts der Hand auf die Eingabefläche mit dem Punkt der 2D-Eingabe eine Fahrer- und oder Beifahrererkennung zu erreichen. Die Auswertung einer Trajektorie des Arms macht die Entscheidung zwischen Fahrer und Beifahrer robuster im Vergleich zum direkten Vergleich des 2-D-Touchkoordinaten der Projektion der 3-D-Schwerpunkt Position auf die berührungsempfindliche HMI-Oberfläche. Dabei wertet die Gestensensorik kontinuierlich die Handbewegungen von Fahrer und Beifahrer aus und klassifiziert die Eingabeperson bei Auslösen von Eingaben auf der HMI-Oberfläche.

Vorzugsweise ist die berührungsempfindliche HMI-Oberfläche (auch berührungsempfindliche HMI-Oberfläche oder Touchscreen) als eine multifunktionale HMI-Oberfläche ausgestaltet. Bevorzugt ist die berührungsempfindliche HMI-Oberfläche Teil eines Bildschirms. Das Erfassen des Berührpunkts erfolgt bei einem direkten Kontakt eines Teils der Hand mit der berührungsempfindlichen HMI-Oberfläche.

Vorzugsweise wird beim Ermitteln des Versatzes festgestellt, ob sich der Schwerpunkt links oder rechts bezüglich einer durch den Kontaktpunkt verlaufenden, senkrecht auf der HMI-Oberfläche stehenden Linie oder Achse befindet. Somit lässt sich der Versatz auf einfache Weise bestimmen. Vorzugsweise entspricht der Versatz einem horizontalen Abstand vom Schwerpunkt zum Kontaktpunkt auf der berührungsempfindlichen HMI-Oberfläche. Dabei liegt der Versatz auf einer gedachten Abszissenachse auf der berührungsempfindlichen HMI-Oberfläche. Die berührungsempfindliche HMI-Oberfläche bzw. der Bildschirm ist in einem Fahrzeug - vorzugsweise in einer Y-Richtung - angeordnet, d.h. in einer Querrichtung zur Fahrtrichtung des Fahrzeugs.

Bevorzugt wird beim Unterscheiden der Anwender festgestellt, welcher Finger der Hand sich im Kontakt mit der berührungsempfindlichen HMI-Oberfläche befindet. Bei dem Finger kann es sich insbesondere um eine Fingerspitze oder eine Fingerkuppe handeln, die den Kontakt mit der berührungsempfindlichen HMI- Oberfläche herstellt. Befindet sich der Schwerpunkt links vom Kontaktpunkt auf der HMI-Oberfläche, wird die berührungsempfindliche HMI-Oberfläche in Ländern mit Linkslenkung von einem Finger des Fahrers bedient. Befindet sich der Schwerpunkt rechts vom Kontaktpunkt auf der HMI-Oberfläche, wird die berührungsempfindliche HMI-Oberfläche in diesen Ländern von einem Finger des Beifahrers bedient. Alternativ kann es sich auch um einen Daumen, eine Daumenspitze oder eine Daumenkuppe handeln, die den Kontakt mit der berührungsempfindlichen HMI- Oberfläche herstellt.

Bevorzugt wird beim Unterscheiden der Anwender festgestellt, von welcher Seite die Hand zur Bedienung der berührungsempfindlichen HMI-Oberfläche kommt. Hierdurch lässt sich der Anwender auf einfache Weise lokalisieren.

Bevorzugt werden gemeinsame Bedienelemente für die Anwender über die berührungsempfindliche HMI-Oberfläche anwenderspezifisch aktiviert. Hierdurch wird eine Bedienung bereitgestellt, die auf Fahrer- oder Beifahrereingaben unterschiedlich reagiert. Alternativ werden verschiedene Bedienelemente für die Anwender über die berührungsempfindlichen HMI-Oberfläche als Splitview-Screens getrennt nach den Anwendern aktiviert. Hierdurch lassen sich verschiedene Bildschirmausgabewinkel den Fahrer- oder Beifahrereingaben zuordnen. Um den Fahrer des Fahrzeugs nicht unnötig vom Verkehr abzulenken und die Sicherheit im Straßenverkehr zu gewährleisten, können Funktionen für diesen Anwender ausgeschlossen werden.

Bevorzugt wird im Ansprechen auf das Unterscheiden der Anwender eine Ausrichtung eines Mikrofons auf den Anwender zur Kommunikation oder Spracherkennung ermöglicht. Dabei kann eine akustische Kamera, Mikrofonarray oder akustische Antenne mittels Beamforming gezielt auf eine Fahrer- oder Beifahrermundposition ausgerichtet werden, wenn die Gestensensorik eine Annäherung der Hand bzw. ein Berühren der Hand auf der HMI-Oberfläche einer Person zugeordnet. Beispielsweise aktiviert der Fahrer die Funktion zur Spracherkennung, um einen Text zu diktieren. Obwohl auch der Beifahrer oder andere Passagiere im Fahrzeug reden, wird das Spracherkennungssystem nur dem Diktat des Fahrers zuhören.

Vorzugsweise kann der Sensor beispielsweise eine Stereokamera, einen Infrarotsensor und/oder eine Laufzeitkamera (englisch: "Time-of-Flight (ToF)"-Kamera) umfassen. Mittels der vorgenannten Sensoren kann eine Abschätzung der Entfernung der jeweiligen Oberflächenpunkte vorgenommen werden, durch welche die Ausrichtung der dem Sensor zugewandten Handoberflächen charakterisiert werden kann. Bevorzugt kommen eine 3D-Feldtechnologie zur Ermittlung eines 3D-Schwerpunkts zum Einsatz oder es erfolgt die Verwendung eines Radarsensors.

Gemäß einem zweiten Aspekt der vorliegenden Erfindung wird eine Anwenderschnittstelle vorgeschlagen, welche beispielsweise für ein Fortbewegungsmittel vorgesehen sein kann. Alternativ oder zusätzlich kann die Anwenderschnittstelle eingerichtet sein, in einem Drahtloskommunikationsgerät bzw. einem mobilen Anwenderendgerät (z.B. Tablet, Smartphone, o.ä.) verwendet zu werden. Die Anwenderschnittstelle umfasst einen Sensor, welcher beispielsweise als Kamera, Infrarotsensor, Laufzeit-Kamera, o.ä., ausgestaltet sein kann. Die Kamera kann beispielsweise auch für Applikationen der Videotelefonie, der Fotografie, o.ä., verwendet werden. Eine Auswerteeinheit (z.B. ein programmierbarer Prozessor, ein elektronisches Steuergerät, o.ä.) kann ebenfalls für abseits der vorliegenden Erfindung gelegene Aufgabenpakete und Rechenoperationen verwendet werden.

Der Sensor ist eingerichtet, eine Hand oder einen Arm nebst Hand eines Anwenders sensorisch zu erfassen und einen Schwerpunkt der Hand oder des Arms nebst Hand des Anwenders die Hand des Anwenders im Sensorsignal zu ermitteln. Die Auswerteeinheit ist eingerichtet, einen Berührungspunkt der Hand bei Kontakt mit der berührungsempfindlichen HMI-Oberfläche zu erfassen, einen Versatz des Schwerpunkts zum Berührungspunkt zu ermitteln und im Ansprechen darauf die Position des Anwenders zu erkennen.

Auf diese Weise ist die erfindungsgemäße Anwenderschnittstelle eingerichtet, die Merkmale, Merkmalskombinationen und die sich aus diesen ergebenden Vorteile des erfindungsgemäßen Verfahrens derart ersichtlich in entsprechender Weise zu verwirklichen, so dass zur Vermeidung von Wiederholungen auf die obigen Ausführungen verwiesen wird.

Gemäß einem dritten Aspekt der vorliegenden Erfindung wird ein Computerprogrammprodukt (z.B. ein Datenspeicher) vorgeschlagen, auf welchem Instruktionen gespeichert sind, die einen programmierbaren Prozessor in die Lage versetzen, die Schritte eines Verfahrens gemäß dem erstgenannten Erfindungsaspekt durchzuführen. Das Computerprogrammprodukt kann z.B. unter Verwendung von CD, DVD, Blue-Ray-Disc, Flash-Speicher, Festplatte, RAM/ROM-Cache, etc., ausgestaltet sein.

Gemäß einem vierten Aspekt der vorliegenden Erfindung wird eine Signalfolge repräsentierend Instruktionen vorgeschlagen, welche einen programmierbaren Prozessor in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem fünften Aspekt der vorliegenden Erfindung wird ein Fortbewegungsmittel (z.B. ein PKW, ein Transporter, ein LKW, ein Motorrad, ein Luft- und/oder Wasserfahrzeug) vorgeschlagen, welches eine Anwenderschnittstelle gemäß dem zweitgenannten Erfindungsaspekt umfasst. Dabei kann die Anwenderschnittstelle insbesondere für den Führer des Fortbewegungsmittels vorgesehen sein, mittels welcher der Führer während der Führung des Fortbewegungsmittels mit dem Fortbewegungsmittel und seinen technischen Einrichtungen kommunizieren kann. Entsprechendes gilt für den Co-Führer, Beifahrer, Co-Pilot, o.ä. Die Merkmale, Merkmalskombinationen sowie die sich aus diesen ergebenden Vorteile entsprechen den in Verbindung mit dem erst- und zweitgenannten Erfindungsaspekt ausgeführten derart ersichtlich, dass zur Vermeidung von Wiederholungen auf die obigen Ausführungen verwiesen wird.

Dabei ist die Erfindung nicht auf ein Fortbewegungsmittel beschränkt. Die Anwenderschnittstelle kann auch im öffentlichen, beruflichen oder privaten stationären Umfeld genutzt werde.

### Kurze Beschreibung der Zeichnungen

Nachfolgend werden Ausführungsbeispiele der vorliegenden Erfindung anhand der beigefügten Zeichnungsfiguren im Detail beschrieben. In den Zeichnungen ist:
- Figur 1: eine schematische Ansicht eines Cockpits eines Fortbewegungsmittels mit einer Anwenderschnittstelle gemäß einem ersten Ausführungsbeispiel der vorliegenden Erfindung;
- Figur 2: eine weitere schematische Ansicht des Cockpits aus Figur 1;
- Figur 3: eine Darstellung eines gemeinsamen Bedienelements für Fahrer und Beifahrer;
- Figur 4: eine Darstellung eines Splitview-Screens für Fahrer und Beifahrer; und
- Figur 5: ein Flussdiagramm veranschaulichend Schritte eines Ausführungsbeispiels eines erfindungsgemäßen Verfahrens.

### Ausführungsformen der Erfindung

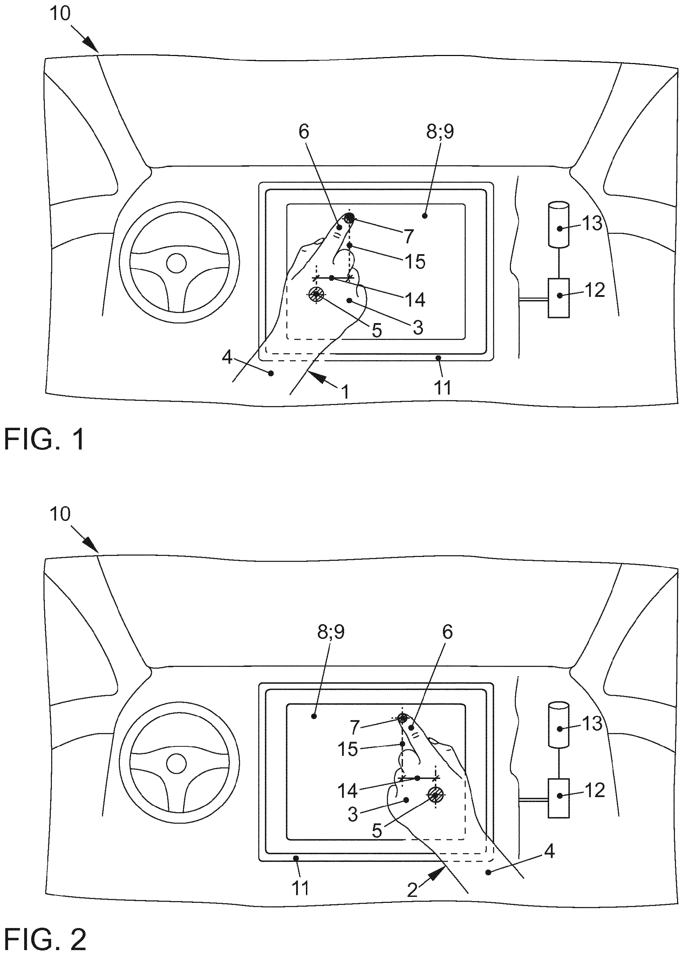

Figur 1 zeigt ein Cockpit eines Fortbewegungsmittels 10, in dessen Armaturenbrett ein Bildschirm 8 mit einer berührungsempfindlichen HMI-Oberfläche 9 als Anzeigeeinrichtung einer erfindungsgemäßen Anwenderschnittstelle vorgesehen ist. Um den Bildschirm 8 herum ist eine Infrarot-LED-Leiste 11 als Sensor zur Erfassung frei im Raum ausgeführter Gesten (auch "3D-Gesten") mittels einer Hand 3 eines Anwenders 1, 2 vorgesehen. Sowohl der Bildschirm 8 als auch die Infrarot-LED-Leiste 11 sind informationstechnisch mit einem elektronischen Steuergerät 12 als Auswerteeinheit verbunden, welche seinerseits mit einem Datenspeicher 13 informationstechnisch verbunden ist. Im Datenspeicher 13 sind Instruktionen zur Ausführung der Schritte eines erfindungsgemäßen Verfahrens gespeichert.

Die Infrarot-LED-Leiste 11 ist eingerichtet, eine Hand 3 oder einen Arm 4 nebst Hand 3 des Anwenders 1, 2 zu erfassen und einen Schwerpunkt 5 der Hand 3 oder des Armes 4 nebst Hand 3 des Anwenders 1 im Sensorsignal zu ermitteln. Das elektronischen Steuergerät 12 ist eingerichtet, einen Berührungspunkt 7 der Hand 3 bei Kontakt mit der berührungsempfindlichen HMI-Oberfläche 9 zu erfassen sowie einen Versatz 14 des Schwerpunkts 5 zum Berührungspunkt 7 zu ermitteln und im Ansprechen darauf eine Position des Anwenders 1, 2 zu erkennen.

Bei dem Anwender 1 handelt es um den Fahrzeugführer, also den Fahrer 1 des Fahrzeugs 10. Der Fahrer 1 setzt typischerweise seine rechte Hand 3 zum Bedienen des Bildschirms 8 ein. Dabei berührt ein Finger 6, nämlich ein Zeigefinger, die berührungsempfindliche HMI-Oberfläche 9. Dass es sich bei dem Teil der Hand 3, der sich im Kontakt mit der berührungsempfindlichen HMI-Oberfläche 9 befindet, um einen Finger 6 der Hand 3 handelt, wird vom elektronischen Steuergerät 12 erkannt.

Beim Ermitteln des Versatzes 14 wird festgestellt, dass sich der Schwerpunkt 5 auf einer linken Seite bezüglich einer durch den Kontaktpunkt 7 verlaufenden, senkrecht auf der HMI-Oberfläche 9 stehenden Linie oder Achse 15 befindet. Auf diese Weise wird erkannt, dass es sich um die eine Hand des Fahrers 1 handeln muss, die die berührungsempfindlichen HMI-Oberfläche 9 bedient.

Figur 2 zeigt eine weitere schematische Ansicht des Cockpits aus Figur 1. Im Unterschied zur Figur 1 handelt es sich bei dem Anwender 2 um den neben dem Fahrer 1 befindlichen Fahrzeuginsassen, also den Beifahrer 2 des Fahrzeugs 10. Der Beifahrer 2 setzt typischerweise seine linke Hand 3 zum Bedienen des Bildschirms 8 ein. Dabei berührt ein Finger 6, nämlich ein Zeigefinger der linken Hand 3, die berührungsempfindliche HMI-Oberfläche 9. Dass es sich bei dem Teil der Hand 3, der sich im Kontakt mit der berührungsempfindlichen HMI-Oberfläche 9 befindet, um einen Finger 6 der Hand 3 handelt, wird vom elektronischen Steuergerät 12 erkannt.

Beim Ermitteln des Versatzes 14 wird festgestellt, dass sich der Schwerpunkt 5 auf einer rechten Seite bezüglich einer durch den Kontaktpunkt 7 verlaufenden, senkrecht auf der HMI-Oberfläche 9 stehenden Linie oder Achse 15 befindet. Auf diese Weise wird erkannt, dass es sich um die eine Hand des Beifahrers 2 handeln muss, die die berührungsempfindliche HMI-Oberfläche 9 bedient.

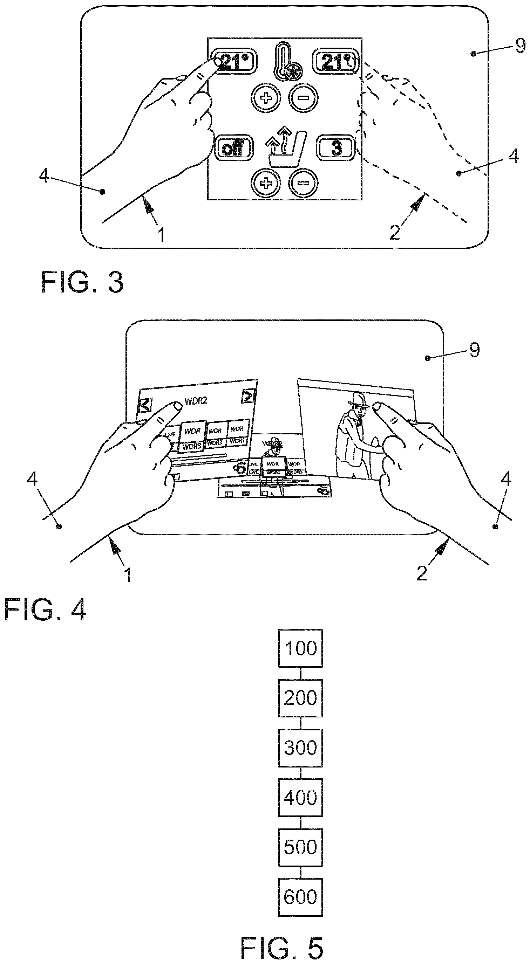

Figur 3 zeigt eine Darstellung eines gemeinsamen Bedienelements für den Fahrer 1 und Beifahrer 2. Das gemeinsame Bedienelement wird über die berührungsempfindliche HMI-Oberfläche 9 getrennt nach Fahrer 1 und Beifahrer 2 aktiviert.

Im Ansprechen auf das Erkennen der rechten Hand 4 des Fahrers 1 kann die Einflussnahme auf eine Solltemperatur und eine Lüftergeschwindigkeit einer gestenbasierten Klimabedienung der Heiz-/Klimaanlage eines Fortbewegungsmittels für den Fahrer veranlasst werden, während im Ansprechen auf das Erkennen der linken Hand 4 des Beifahrers 2 (gestrichelte Linie) die entsprechenden Einstellungen für die Beifahrerseite vorgenommen werden. Die vorgenannten Anwendungsfälle können auch auf andere personenbezogene Funktionsumfänge, wie Sitzposition, Beleuchtungsoptionen, Fensterheber, und/oder dergleichen angewendet werden.

Figur 4 zeigt eine Darstellung eines Splitview-Screens für den Fahrer 1 und Beifahrer 2. Dabei werden verschiedene Bedienelemente für den Fahrer 1 und Beifahrer 2 über die berührungsempfindlichen HMI-Oberfläche 9 als Splitview-Screen getrennt nach den Anwendern 1, 2 aktiviert.

Im Ansprechen auf das Erkennen einer Hand 4 des Fahrers 1 kann ein erstes Bedienelement, wie beispielsweise eine Einflussnahme auf das zu empfangende Radioprogramm veranlasst werden, während gleichzeitig im Ansprechen auf das Erkennen einer Hand 4 des Beifahrers 2 Multimediainhalte, wie bspw. Bilder oder Filme betrachtet werden können.

Figur 5 zeigt Schritte eines Ausführungsbeispiels eines erfindungsgemäßen Verfahrens zur Erkennung einer Hand eines Anwenders. In Schritt 100 wird eine Hand oder eine Arm nebst Hand des Anwenders mittels eines Sensors erfasst. Der Sensor kann beispielsweise eine Stereokamera, einen Infrarotsensor oder eine Laufzeitkamera umfassen. Der Sensor kann in einer Anwenderschnittstelle vorgesehen sein. Die Anwenderschnittstelle kann für ein mobiles Anwenderendgerät (z.B. Drahtloskommunikationsgerät) oder für ein Fortbewegungsmittel vorgesehen sein. In Schritt 200 wird ein Schwerpunkt der Hand oder ein Arm nebst Hand des Anwenders im Sensorsignal identifiziert (ermittelt). In Schritt 300 wird ein Berührungspunkt eines Fingers der Hand bei Kontakt mit der berührungsempfindlichen HMI-Oberfläche erfasst. In Schritt 400 wird ein Versatz des Schwerpunkts zum Berührungspunkt ermittelt und im Ansprechen darauf erfolgt in Schritt 500 ein Unterscheiden der Anwender, d.h. ein Erkennen der Position des die HMI-Oberfläche bedienenden Anwenders.

Für Anwenderschnittstellen, welche auf eine von links kommende Hand (z.B. eines Beifahrers) anders reagieren sollen, als auf eine von rechts kommende Hand (z.B. eines Fahrers) ermöglicht die vorliegende Erfindung somit eine besonders sichere Freischaltung der dem Anwender zur Verfügung gestellten Funktionen. Ferner wird eine robuste Unterscheidung einer Gesteneingabe zwischen einem Fahrer oder Beifahrer zur Verfügung gestellt, um die (Sitz-)Position des Anwenders zu erkennen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, der durch die beigefügten Ansprüche definiert wird.

### Bezugszeichenliste

- 1: Fahrer
- 2: Beifahrer
- 3: Hand
- 4: Arm
- 5: Schwerpunkt
- 6: Finger
- 7: Kontaktpunkt
- 8: Display
- 9: HMI-Oberfläche
- 10: PKW
- 11: Sensor
- 12: Auswerteeinheit
- 13: Datenspeicher
- 14: Versatz
- 15: Achse
- 100-600: Verfahrensschritte

## Patentansprüche

1. Verfahren zur Anwenderunterscheidung für eine berührungsempfindliche HMI-Oberfläche (9), wobei die berührungsempfindliche HMI-Oberfläche (9) ortsfest zwischen einer ersten Bedienposition eines ersten Anwenders (1) links von der berührungsempfindlichen HMI-Oberfläche (9) und einer zweiten Bedienposition eines zweiten Anwenders (2) rechts von der berührungsempfindlichen HMI-Oberfläche (9) angeordnet ist, umfassend die Schritte:
- Erfassen (100) einer Hand (3) oder eines Armes (4) nebst Hand (3) eines Anwenders (1, 2) mittels eines Sensors (11),
- Ermitteln (200) eines Schwerpunkts (5) der Hand (3) oder des Armes (4) nebst Hand (3) des Anwenders (1, 2) aus dem Sensorsignal, und
- Erfassen (300) eines Berührungspunkts (7) der Hand (3) bei Kontakt mit der berührungsempfindlichen HMI-Oberfläche (9),
**gekennzeichnet durch**:
- Ermitteln (400) eines bezüglich der berührungsempfindlichen HMI-Oberfläche (9) horizontalen Versatzes (14) des Schwerpunkts (5) relativ zum Berührungspunkt (7) und im Ansprechen darauf
- Unterscheiden (500) der die HMI-Oberfläche bedienenden Anwender (1, 2) anhand des horizontalen Versatzes (14), wobei der erste Anwender (1) erkannt wird, wenn sich der Schwerpunkt (5) links vom Berührungspunkt (7) befindet, und wobei der zweite Anwender (2) erkannt wird, wenn sich der Schwerpunkt (5) rechts vom Berührungspunkt (7) befindet.

2. Verfahren nach Anspruch 1, wobei beim Unterscheiden (500) der Anwender (1, 2) festgestellt wird, von welcher Seite die Hand (3) zur Bedienung der berührungsempfindlichen HMI-Oberfläche (9) kommt.

3. Verfahren nach einem der vorherstehenden Ansprüche, wobei gemeinsame Bedienelemente für die Anwender (1, 2) über die berührungsempfindliche HMI-Oberfläche (9) anwenderspezifisch aktiviert werden.

4. Verfahren nach einem der Ansprüche 1 oder 2, wobei verschiedene Bedienelemente für die Anwender (1, 2) über die berührungsempfindliche HMI-Oberfläche (9) als Splitview-Screens getrennt nach den Anwendern (1, 2) aktiviert werden.

5. Verfahren nach einem der vorherstehenden Ansprüche, wobei im Ansprechen auf das Unterscheiden (500) der Anwender (1, 2) eine Ausrichtung eines Mikrofons auf den Anwender (1, 2) zur Kommunikation oder Spracherkennung (600) ermöglicht wird.

6. Anwenderschnittstelle umfassend
- einen Sensor (11), der eingerichtet ist,
- eine Hand (3) oder einen Arm (4) nebst Hand (3) eines Anwenders (1, 2) zu erfassen und
- einen Schwerpunkt (5) der Hand (3) oder des Armes (4) nebst Hand (3) des Anwenders (1, 2) aus dem Sensorsignal zu ermitteln, und
- eine Auswerteeinheit (12), die eingerichtet ist,
- einen Berührungspunkt (7) der Hand (3) bei Kontakt mit einer berührungsempfindlichen HMI-Oberfläche (9) zu erfassen, wobei die berührungsempfindliche HMI-Oberfläche (9) ortsfest zwischen einer ersten Bedienposition eines ersten Anwenders (1) links von der berührungsempfindlichen HMI-Oberfläche (9) und einer zweiten Bedienposition eines zweiten Anwenders (2) rechts von der berührungsempfindlichen HMI-Oberfläche (9) angeordnet ist,
**dadurch gekennzeichnet, dass** die Auswerteeinheit (12) eingerichtet ist,
- einen bezüglich der berührungsempfindlichen HMI-Oberfläche (9) horizontalen Versatz (14) des Schwerpunkts (5) relativ zum Berührungspunkt (7) zu ermitteln und im Ansprechen darauf
- anhand des horizontalen Versatzes (14) die die HMI-Oberfläche bedienenden Anwender (1, 2) zu unterscheiden, wobei der erste Anwender (1) erkannt wird, wenn sich der Schwerpunkt (5) links vom Berührungspunkt (7) befindet, und wobei der zweite Anwender (2) erkannt wird, wenn sich der Schwerpunkt (5) rechts vom Berührungspunkt (7) befindet.

7. Anwenderschnittstelle nach Anspruch 6, welche weiter eingerichtet ist, ein Verfahren gemäß einem der vorstehenden Ansprüche 2 bis 5 auszuführen.

8. Computerprogrammprodukt umfassend Instruktionen, welche, wenn Sie auf einer Auswerteeinheit (12) einer Anwenderschnittstelle nach einem der Ansprüche 6 oder 7 ausgeführt werden, die Auswerteeinheit (12) veranlassen, die Schritte eines Verfahrens nach einem der Ansprüche 1 bis 5 auszuführen.

9. Datenträgersignal, das das Computerprogrammprodukt nach Anspruch 8 übertragt

10. Fortbewegungsmittel (10) umfassend eine Anwenderschnittstelle nach einem der Ansprüche 6 oder 7.

## Claims

1. Method for user distinguishing for a touch-enabled HMI interface (9), wherein the touch-enabled HMI interface (9) is arranged in a stationary manner between a first operating position of a first user (1) to the left of the touch-enabled HMI interface (9) and a second operating position of a second user (2) to the right of the touch-enabled HMI interface (9), comprising the steps:
- detecting (100) a hand (3) or an arm (4) in addition to the hand (3) of a user (1, 2) by means of a sensor (11),
- determining (200) a centre of gravity (5) of the hand (3) or the arm (4) in addition to the hand (3) of the user (1, 2) from the sensor signal, and
- detecting (300) a contact point (7) of the hand (3) upon contact with the touch-enabled HMI interface (9),
**characterised by**:
- determining (400) a horizontal displacement (14), with regard to the touch-enabled HMI interface (9), of the centre of gravity (5) relative to the contact point (7) and in response thereupon
- distinguishing (500) the user (1, 2) operating the HMI interface by means of the horizontal displacement (14), wherein the first user (1) is recognised when the centre of gravity (5) is to the left of the contact point (7), and wherein the second user (2) is recognised when the centre of gravity (5) is to the right of the contact point (7).

2. Method according to claim 1, wherein when distinguishing (500) the users (1, 2) it is determined which side the hand (3) for operating the touch-enabled HMI interface (9) is coming from.

3. Method according to one of the preceding claims, wherein mutual operating elements for the users (1, 2) are activated in a user-specific manner via the touch-enabled HMI interface (9).

4. Method according to one the claims 1 or 2, wherein different operating elements for the users (1, 2) are activated via the touch-enabled HMI interface (9) as split-view screens separated according to the users (1, 2).

5. Method according to one of the preceding claims, wherein in the response to the distinguishing (500) of the users (1, 2), an orientation of a microphone to the user (1, 2) is enabled for communication or voice recognition (600).

6. User interface, comprising
- a sensor (11), equipped to
- detect a hand (3) or an arm (4) in addition to the hand (3) of a user (1, 2), and
- determine a centre of gravity (5) of the hand (3) or the arm (4) in addition to the hand (3) of the user (1, 2) from the sensor signal, and
- an evaluation unit (12), equipped to
- detect a contact point (7) of the hand (3) upon contact with a touch-enabled HMI interface (9), wherein the touch-enabled HMI interface (9) is arranged in a stationary manner between a first operating position of a first user (1) to the left of the touch-enabled HMI interface (9) and a second operating position of a second user (2) to the right of the touch-enabled HMI interface (9), **characterised by** the evaluation unit (12) being equipped to
- determine a horizontal displacement (14), with regard to the touch-enabled HMI interface (9), of the centre of gravity (5) relative to the contact point (7), and in response thereupon
- to distinguish by means of the horizontal displacement (14) the users (1, 2) operating the HMI interface, wherein the first user (1) is recognised when the centre of gravity (5) is to the left of the contact point (7), and wherein the second user (2) is recognised when the centre of gravity (5) is to the right of the contact point (7).

7. User interface according to claim 6, which is further equipped to execute a method according to one of the preceding claims 2 to 5.

8. Computer program product comprising instructions which, when executed on an evaluation unit (12) of a user interface according to one of the claims 6 or 7, prompt the evaluation unit (12) to execute the steps of a method according to one of the claims 1 to 5.

9. Data carrier signal, transmitting the computer program product according to claim 8.

10. Means of locomotion (10) comprising a user interface according to one of the claims 6 or 7.

## Revendications

1. Procédé de distinction de l'utilisateur pour une surface tactile IHM (9), dans lequel la surface tactile IHM (9) est agencée de manière fixe entre une première position d'activation d'un premier utilisateur (1) à gauche de la surface tactile IHM (9) et une deuxième position d'activation d'un deuxième utilisateur (2) à droite de la surface tactile IHM (9), comprenant les étapes:
- détecter (100) une main (3) ou un bras (4) avec une main (3) d'un utilisateur (1, 2) au moyen d'un capteur (11),
- déterminer (200) un centre de gravité (5) de la main (3) ou du bras (4) avec la main (3) de l'utilisateur (1, 2) à partir du signal du capteur, et
- détecter (300) un point de contact (7) de la main (3) en contact avec la surface tactile IHM (9),
**caractérisé par**:
- déterminer (400) un décalage horizontal (14) du centre de gravité (5) relatif au point de contact (7) par rapport à la surface tactile IHM (9) et en réponse à celui-ci
- distinguer (500) les utilisateurs qui activent la surface IHM (1, 2) à l'aide du décalage horizontal (14), le premier utilisateur (1) étant reconnu, quand le centre de gravité (5) se trouve à gauche du point de contact (7), et le deuxième utilisateur (2) étant reconnu, quand le centre de gravité (5) se trouve à droite du point de contact (7).

2. Procédé selon la revendication 1, dans lequel lors de la distinction (500) des utilisateurs (1, 2) il est établi, de quel côté la main (3) arrive pour activer la surface tactile IHM (9).

3. Procédé selon l'une des revendications précédentes, dans lequel des éléments d'activation communs pour les utilisateurs (1, 2) sont activés de manière personnalisée à travers la surface tactile IHM (9).

4. Procédé selon l'une des revendications 1 ou 2, dans lequel différents éléments d'activation pour les utilisateurs (1, 2) sont activés à travers la surface tactile IHM (9) sous la forme d'écrans Splitview séparés en fonction des utilisateurs (1, 2) .

5. Procédé selon l'une des revendications précédentes, dans lequel en réponse à la distinction (500) des utilisateurs (1, 2) une orientation d'un microphone vers l'utilisateur (1, 2) est rendue possible pour la communication ou la reconnaissance vocale (600).

6. Interface utilisateur comprenant
- un capteur (11), qui est conçu
- pour détecter une main (3) ou un bras (4) avec une main (3) d'un utilisateur (1, 2) et
- pour déterminer un centre de gravité (5) de la main (3) ou du bras (4) avec la main (3) de l'utilisateur (1, 2) à partir du signal du capteur, et
- une unité d'évaluation (12), qui est conçue
- pour détecter un point de contact (7) de la main (3) en contact avec une surface tactile IHM (9), la surface tactile IHM (9) étant agencée de manière fixe entre une première position d'activation d'un premier utilisateur (1) à gauche de la surface tactile IHM (9) et une deuxième position d'activation d'un deuxième utilisateur (2) à droite de la surface tactile IHM (9),
**caractérisée en ce que** l'unité d'évaluation (12) est conçue
- pour déterminer un décalage horizontal (14) du centre de gravité (5) relatif au point de contact (7) par rapport à la surface tactile IHM (9) et en réponse à celui-ci
- pour distinguer à l'aide du décalage horizontal (14) les utilisateurs qui activent la surface tactile IHM (1, 2), le premier utilisateur (1) étant reconnu, quand le centre de gravité (5) se trouve à gauche du point de contact (7), et le deuxième utilisateur (2) étant reconnu, quand le centre de gravité (5) se trouve à droite du point de contact (7) .

7. Interface utilisateur selon la revendication 6, qui est aussi conçue pour exécuter un procédé selon l'une des revendications précédentes 2 à 5.

8. Produit programme d'ordinateur comprenant des instructions, qui, quand elles sont exécutées dans une unité d'évaluation (12) d'une interface utilisateur selon l'une des revendications 6 ou 7, ordonne à l'unité d'évaluation (12), d'exécuter les étapes d'un procédé selon l'une des revendications 1 à 5.

9. Signal porteur de données, que le produit programme d'ordinateur transmet selon la revendication 8.

10. Moyen de locomotion (10) comprenant une interface utilisateur selon l'une des revendications 6 ou 7.
